# EUROPÄISCHE PATENTSCHRIFT

(11) **EP 0 891 039 B1**
(45) Veröffentlichungstag und Bekanntmachung des Hinweises auf die Patenterteilung: **05.12.2001**
(21) Anmeldenummer: 98111128.9
(22) Anmeldetag: 17.06.1998
(51) Int. Cl.: H02M 7/217, H02M 7/06

(54) **Kapazitives Netzteil**
Capacitive power supply
Alimentation capacitive de puissance

(30) Priorität: 10.07.1997 DE 19729480
(43) Veröffentlichungstag der Anmeldung: 13.01.1999
(73) Patentinhaber: ABB PATENT GmbH, 68526 Ladenburg (DE)
(72) Erfinder: Heite, Christian, Dr.-Ing., 58553 Halver (DE)
(74) Vertreter: Rupprecht, Klaus, Dipl.-Ing.

(56) Entgegenhaltungen:
- EP-A- 0 288 223
- FR-A- 2 307 418
- US-A- 3 699 399
- US-A- 3 863 164
- US-A- 3 978 388
- US-A- 4 293 796
- US-A- 4 432 034
- PATENT ABSTRACTS OF JAPAN vol. 9, no. 118 (E-316), 23. Mai 1985 & JP 60 005776 A (HIROSHI KAMIYAMA), 12. Januar 1985
- PATENT ABSTRACTS OF JAPAN vol. 12, no. 94 (E-593), 26. März 1988 & JP 62 225173 A (HITACHI), 3. Oktober 1987

## Beschreibung

Die Erfindung bezieht sich auf ein kapazitives Netzteil.

Solche Netzteile finden beispielsweise zur Stromversorgung einer elektronischen Last in einem Leistungsbereich bis etwa 2 W Anwendung. Wenn keine galvanische Trennung gefordert ist, ermöglichen sie eine einfache und kompakte Stromversorgungseinrichtung.

Bei einer in Figur 2 gezeigten typischen Schaltungsanordnung eines kapazitiven Netzteils erfolgt eine Einspeisung einer Wechselspannung über einen Netzteilkondensator C1 in einen Zweiweggleichrichter G1. Die erzeugte Gleichspannung wird mittels einer Zenerdiode D1 stabilisiert und speist einen Ladekondensator C2, zu dem eine Last, z.B. eine Elektronikschaltung LA parallelgeschaltet ist.

Der Netzteilkondensator wirkt in dieser Anordnung wie ein strombegrenzender hochohmiger Vorwiderstand, in dem jedoch im Gegensatz zu einem ohmschen Vorwiderstand keine Wirkleistungsverluste entstehen. Entsprechend einer Faustregel (I_{Netz}=U_{Netz}•f_{Netz}•2_{π}•C_{Netz}) können bei Zweiweggleichrichtung und 230V Netzwechselspannung etwa 70 mA pro 1 µF Kondensatorkapazität entnommen werden.

Das Netzteil kann auch mit einer Einweggleichrichtung realisiert werden, wobei dann bei gleicher Auslegung nur ein halb so hoher Strom entnehmbar ist.

Kapazitive Netzteile werden für den maximal benötigten Laststrom dimensioniert. In den Phasen geringerer Stromaufnahme durch die Last muß der überschüssige Strom mittels der als Shuntregler wirkenden Zenerdiode D1 vorbeigeleitet werden. Dies kann zu einer erheblichen Verlustleistung des Shuntreglers führen. Im vorgenannten Auslegungsbeispiel und bei einer wechselnden Stromaufnahme der Last zwischen 30 und 60 mA kann ein Strom I_{D} zwischen 10 und 40 mA durch die Zenerdiode D1 fließen. Bei einer Zenerspannung von beispielsweise 24V werden in der Zenerdiode D1 bei kleinem Laststrom etwa 1 W als Verlustleistung umgesetzt.

Ein kapazitives Netzteil der vorbeschriebenen Art ist beispielsweise in JP 60005776 dargestellt.

In US 3 863 164 ist ein Netzteil eines Fernsehgerätes beschrieben, dessen Zweiweggleichrichteranordnung für einen Standby-Betrieb in einen Einwegmodus umschaltbar ist. Eine durch die Last gesteuerte selbsttätige Umschaltung ist dabei allerdings nicht gegeben.

FR 2 307 418 beschreibt ein Netzteil mit einem Brückengleichrichter, der in einem Brückenzweig einen mit einer Diode in Reihe geschalteten Thyristor aufweist. In Abhängigkeit von der Ausgangsgleichspannung wird mittels eines Schaltwerkes der Thyristor gesteuert, so daß eine Umschaltung zwischen Ein- und Zweiwegmodus erreicht ist. Die gesamte Schaltungsanordnung ist relativ aufwendig.

EP 0288 223 A offenbart ein Netzteil mit einer Brückenschaltung, bei der in einem Brückenzweig mittels eines Relaiskontakts oder eines Thyristors eine gesteuerte Umschaltung zwischen Ein- und Zweiwegmodus erreicht wird.

Der Erfindung liegt die Aufgabe zugrunde, ein kapazitives Netzteil anzugeben, das zur Speisung einer Last mit wechselnder Stromaufnahme geeignet ist, und bei dem eine lastabhängig gesteuerte Umschaltung zwischen Ein- und Zweiwegmodus erreicht ist., wobei die Verlustleistung reduziert ist,

Diese Aufgabe wird bei einem kapazitiven Netzteil mit den im Anspruch 1 angegebenen Merkmalen gelöst.

Ein solches Netzteil ist besonders geeignet zur Speisung elektronischer Einrichtungen, deren Betriebsweise zwischen einem Bereitschaftsbetrieb (Stand by) und einem Vollastbetrieb wechselt. Derartige Geräte sind in einer großen Anzahl an Stromversorgungsnetze angeschlossen oder anschließbar, beispielsweise als Teilnehmer eines Netzbussystems. Mit Netzbussystem ist hier ein Bussystem der Gebäudesystemtechnik bezeichnet, bei dem keine besonderen Datenleitungen benötigt werden, da die Signalübertragung auf elektrischen Niederspannungsnetzen erfolgt. Durch die erfindungsgemäße Ausführung des kapazitiven Netzteils läßt sich die Verlustleistung im meist lang andauernden Bereitschaftsbetrieb erheblich reduzieren.

Die Umschaltung zwischen Zweiwegbetrieb und Einwegbetrieb läßt sich durch Ansteuerung eines Transistors als Überbrückungsschalter erreichen, der eine Diode eines Brückenzweiaes überbrückt.

Als Schaeter sind besonders Halbleiterschaeter geeignet. In einem Ansführungsbeipiel ist ein Bipolartransistor verwendet.

Eine weitere Beschreibung der Erfindung erfolgt nachstehend anhand eines in der Zeichnung dargestellten Ausführungsbeispiels.

Es zeigen:

Die Ansteuerung des Überbrückungsschalters kann beispielweise mittels eines von der Schaltungs anordnung der last bereitgestellten Signals erfolgen. Eine andere Möglichkeit besteht darin, eine Einrichtung vorzusehen, die in Abhängigkeit, von der Spannung an der Last den Überbrückungsschalter ansteuert.
Fig. 1 ein kapazitives Netzteil gemäß der Erfindung und
Fig. 2 ein kapazitives Netzteil nach dem Stand der Technik..

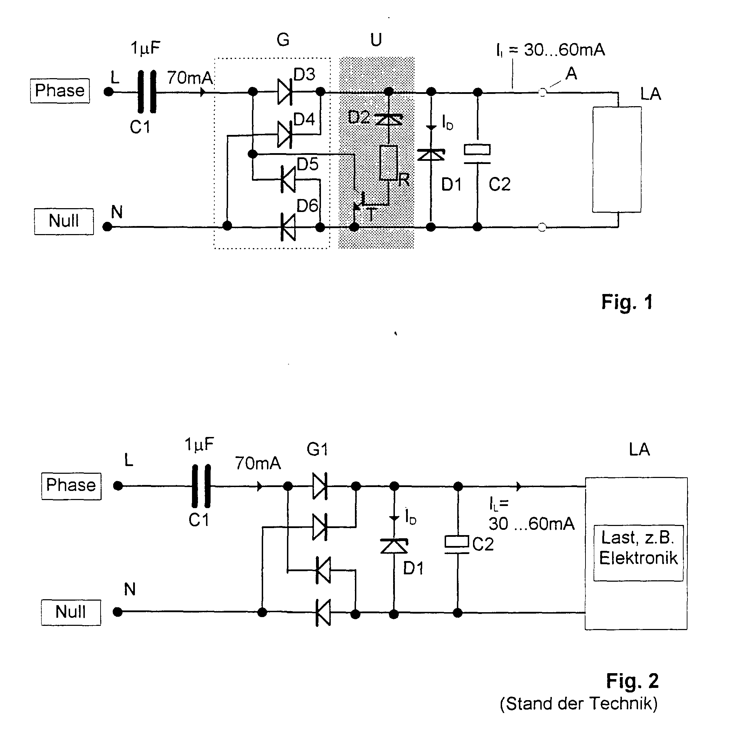

Figur 1 zeigt eine Schaltungsanordnung eines kapazitiven Netzteils, an dessen Ausgang A eine Last LA z.B. eine Elektronikschaltung angeschlossen ist. Das Netzteil wird aus einem Wechselspannungsnetz L,N gespeist. Ein Wechselstrom von etwa 70 mA gelangt über einen Netzkondensator C1 mit einer Kapazität von beispielsweise 1 µF zu einer Gleichrichteranordnung G. In der Zeichnung beispielhaft angegebene typische Stromwerte beziehen sich auf ein 230V Netz und den mit 1 µF angegebenen Netzkondensator C1.

Die Gleichrichteranordnung G ist eine Zweiwegbrückenschaltung mit vier Dioden D3 bis D4. Auf der Gleichspannungsseite sind wie beim Stand der Technik gemäß Figur 2, eine erste Zenerdiode D1 als Shuntregler und ein Ladekondensator C2 parallelgeschaltet.

Außerdem ist auf der Gleichspannungsseite eine Umschalteinrichtung U mit einem Bipolartransistor T angeordnet, über dessen Kollektor-Emitter-Strecke ein Brückenzweig, hier die Gleichrichterdiode D5 überbrückbar ist. Der Basisanschluß des Transistors ist über einen Basiswiderstand R und eine zweite Zenerdiode D2 mit dem Gleichspannungsausgang A verbunden. Die Zenerspannung der zweiten Zenerdiode D2 ist etwas kleiner gewählt als die Zenerspannung der ersten Diode D1.

Überschreitet die Spannung am Ausgang A die Summe der Zenerspannung der zweiten Diode D2 und der Flußspannung der Basis-Emitter-Diode des Transistors T, so wird der Transistor T leitend und schaltet die Gleichrichteranordnung G in den Einwegmodus. Im Einwegmodus wirkt die mit D6 bezeichnete Diode als Freilaufdiode. Wenn die Spannung am Ladekondensator C2 bzw. Ausgang A unter den durch die Zenerdiode D2 vorgegebenen Schwellwert sinkt, sperrt der Transistor und das Netzteil arbeitet wieder im Zweiwegmodus. Durch geeignete Dimensionierung der Komponenten, insbesondere der zweiten Zenerdiode D2 läßt sich erreichen, daß die erste Zenerdiode D1 in den typischen Betriebszuständen der Last praktisch stromlos bleibt und dadurch die Gesamtverlustleistung des Netzteils erheblich reduziert wird.

## Patentansprüche

1. Kapazitives Netzteil mit einer Zweiweggleichrichteranordnung (G) zur Speisung einer mit wechselnder Stromaufnahme Last (LA) aus einem Wechselspannungsnetz (L, N), wobei eine Einrichtung zur Umschaltung der Zweiweggleichrichteranordnung (G) zwischen einen Zweiwegmodus und einen Einwegmodus vorhanden ist, **dadurch gekennzeichnet, daß**
a) das Netzteil ausgangsseitig einen Ladekondensator (C2) und eine erste Zenerdiode (D1) zur Spannungsstabilisierung aufweist,
b) zur Umschaltung der Zweiweggleichrichteranordnung (G) in den Einwegmodus ein Transistor (T) verwendet ist, dessen Kollektor-Emitter-Strecke einem Gleichrichterzweig (D5) der Zweiweggleichrichteranordnung (G) parallel geschaltet ist, und
c) zur von der Spannung am Ausgang (A) des Netzteils abhängigen Umschaltung der Basisanschluß des Transistors (T) über einen Widerstand (R) und eine damit in Reihe geschaltete zweite Zenerdiode (D2) mit dem Ausgang (A) des Netzteils verbunden ist, wobei die Zenerspannung der zweiten Zenerdiode (D2) kleiner gewählt ist, als die Zenerspannung der ersten Zenerdiode (D1).

## Claims

1. Capacitive. power supply unit having a full-wave rectifier arrangement (G) for feeding a load (LA) with a varying power consumption from an AC voltage mains system (L, N), with a device being provided for switching the full-wave rectifier arrangement (G) between a full-wave mode and a half-wave mode, **characterized in that**
a) the power supply unit has, on the output side, a charge capacitor (C2) and a first zener diode (D1) for voltage stabilization,
b) a transistor (T) is used for switching the full-wave rectifier arrangement (G) to the half-wave mode, with the collector-emitter path of this transistor (T) being connected in parallel with a rectifier arm (D5) of the full-wave rectifier arrangement (G), and
c) for switching as a function of the voltage at the output (A) of the power supply unit, the base connection of the transistor (T) is connected via a resistor (R) and a second zener diode (D2) connected in series with it to the output (A) of the mains power supply unit, with the zener voltage of the second zener diode (D2) being chosen to be lower than the. zener voltage of the first zener diode (D1).

## Revendications

1. Alimentation capacitive comportant un module redresseur (G) à deux cellules pour l'alimentation à partir d'un réseau à tension alternative (L, N) d'une charge (LA) dont la consommation varie, un dispositif étant prévu pour la commutation du module redresseur à deux cellules (G) entre un mode de fonctionnement à deux cellules et un mode de fonctionnement à une seule cellule, **caractérisé en ce que**
a) l'alimentation comporte côté sortie, un condensateur de charge (C2) et une première diode Zener (D1) pour la stabilisation de la tension,
b) pour la commutation du module redresseur à deux cellules (G) en mode de fonctionnement à une cellule,on utilise un transistor (T) dont la branche collecteur-émetteur est connectée en parallèle avec une cellule redresseuse (D5) du module redresseur à deux cellules (G) et
c) pour la commutation en fonction de la charge appliquée à la sortie (A) de l'alimentation, la base du transistor (T) est connectée à la sortie (A) de l'alimentation par l'intermédiaire d'une résistance (R) et d'une seconde diode Zener (D2) branchée en série avec ladite résistance, la tension Zener de la seconde diode Zener (D2) étant choise inférieure à la tension Zener de la première diode Zener (D1).
